(19) Europäisches Patentamt
European Patent Office
Office européen des brevets

(11) **EP 2 104 071 A1**

(12) **EUROPEAN PATENT APPLICATION**

(43) Date of publication:
**23.09.2009 Bulletin 2009/39**

(51) Int Cl.:
***G06T 7/20*** (2006.01)

(21) Application number: **08300148.7**

(22) Date of filing: **19.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Thomson Licensing**
**92100 Boulogne-Billancourt (FR)**

(72) Inventors:
• **Fradet, Matthieu**
**92648 BOULOGNE CEDEX (FR)**

• **Robert, Philippe**
**92648 BOULOGNE CEDEX (FR)**
• **Perez, Patrick**
**92648 BOULOGNE CEDEX (FR)**

(74) Representative: **Le Dantec, Claude**
**Thomson**
**European Patent Operations**
**46 Quai Alphonse Le Gallo**
**92648 Boulogne-Billancourt (FR)**

(54) **Method for segmenting video segments**

(57)   The invention proposes a new motion layer extraction method using reference layer mosaics. One motivation is to work with distant images (whose motion in between is more discriminative) while reducing the number of pairs of images to be handled benefiting from the fact that layer mosaics represent the video sequence in a compact way. In this model, not only extracted layer supports for mosaicing are used but also layer mosaics for motion segmentation.

In the proposed approach, instead of linking temporally many images pairs from the sequence, the currently processed original image is linked temporally with two sets of motion layer mosaics only. Thus a new image-to-mosaic data term replaces the usual image-to-image motion data term in the objective classification function.

Fig 2

EP 2 104 071 A1

**Description**

The problem of segmenting a video in regions of similar motion has been for a long time a hot topic in computer vision and it is still an open problem today. Motion layer extraction has many applications, such as video compression, mosaicing, video object removal, etc. Moreover the extracted layers can be used for advanced video editing tasks including matting and compositing. The usual assumption is that a scene can be described by a set of layers whose motion in the plane is well described by a parametric model. Motion segmentation consists in estimating the motion parameters of each layer and in extracting the layer supports. There are many different approaches.

One type of motion segmentation methods relies on the partitioning of a dense motion field previously estimated. A K-mean clustering algorithm on the motion estimates can be used. The Minimum Description Length (MDL) encoding principle is proposed to decide automatically the adequate number of models. Some authors propose to combine dense motion estimation and parametric segmentation. Some others extract layers either jointly, or one after another using a direct parametric segmentation with no optical flow computation. More recently, video segmentation problem was formulated into the graph cut framework. A sequential approach described provides a segmentation map for the current image taking into account the previous labeling and matching the current image with the next one only. In such a sequential method, in poorly textured regions or when the different motions are small, motion estimated between consecutive images is not likely to be very different from one region to another, which does not help segmentation process. Some researchers moved naturally to simultaneous batch approaches to increase temporal consistency. The aim is to obtain jointly the segmentation of N images using a 3D graph. Some methods are based on temporal constraints between an image and the subsequent ones. One method considers temporal constraints between successive images but uses also more distant pairs of images to handle small motion cases when computing motion residuals. It is important to notice that such batch methods require that the motion models have already been estimated for the N considered images before the supports extraction, which implies that a clustering has already been done. Moreover this number N of images processed in the 3D graph can certainly not cover a whole sequence due to complexity issues. These methods also impose matching large numbers of image pairs without exploiting the large amount of implied redundancy. Complementary to the motion segmentation task, some authors use the layer representation and the extracted supports to generate as many layer mosaics as extracted motion layers. For a considered layer, its mosaic corresponds to a still image in which the supports of all the images are accumulated to create a single larger layer.

In order to solve at least one of the abovementioned problems, the invention proposes a new motion layer extraction method using reference layer mosaics. One motivation is to work with distant images (whose motion in between is more discriminative) while reducing the number of pairs of images to be handled benefiting from the fact that layer mosaics represent the video sequence in a compact way. In this model, not only extracted layer supports for mosaicing are used but also layer mosaics for motion segmentation.
In the proposed approach, instead of linking temporally many images pairs from the sequence, the currently processed original image is linked temporally with two sets of motion layer mosaics only. Thus a new image-to-mosaic data term replaces the usual image-to-image motion data term in the objective classification function.

The proposed invention concerns a method for segmenting video segments comprising the steps of

- determining reference instants, which cut the shots into a plurality of intervals, the images defined at reference instants being called reference images,
- segmenting at least one reference image to obtain a set of layers for at least the reference images,
- determining one mosaic associated with each of the layer of the reference images, sequentially, for each image in each defined interval,
- forward and backward motion estimation compared to the reference images for each layer of the current image to establish motion models,
- energy determination as a function of color attributes, temporal constraints, spatial smoothness,
- segmentation of the current image by minimizing the the energy,
According to the invention, the energy further comprises an image-to-mosaic motion data term.

According to a preferred embodiment, the two reference images are segmented in order to obtain a set of layers for the two reference images.

Preferentially, the mosaic of a given layer results from the accumulation of the layer data from the previously segmented images.

According to an alternative, the mosaic of a given layer results from the segmentation of one previous image.

Preferentially, the method further comprises a step of projection of the segmented layers of the current image to the corresponding reference mosaics to update the reference mosaics.

Preferentially, the energy minimization uses the graph cuts framework.

Preferentially, when all images in the interval have been segmented, it comprises a further step of user interaction to refine at least one of the obtained mosaics.

Preferentially, further to the user interaction, the following steps are repeated sequentially for each image in each defined interval with the updated mosaics,

- forward and backward motion estimation compared to the reference images for each layer of the current image to establish motion models,
- energy determination as a function of color attributes, temporal constraints, spatial smoothness, an image-to-motion data term
- segmentation of the current image by minimizing the the energy.

In another embodiment, a user interaction modifies at least one mosaic manually during the sequential steps.

Other characteristics and advantages of the invention will appear through the description of a non-limiting embodiment of the invention, which will be illustrated, with the help of the enclosed drawing:

- Figure 1 represents an example of a flow chart of a method according to the invention,
- Figure 2 represents an example of mosaics matching between the current image to be segmented and the mosaics of the corresponding reference images.

The invention proposes an iterative technique to estimate the motion parameters, to extract the support of each layer, and to create layer mosaics as the segmentation progresses. At the end of the segmentation, like with every segmentation method, it can happen that the obtained boundaries are not precisely the expected ones. Often the users have no other possibility than interacting on every images one after another to correct the unsatisfactory result. The present method proposes an original way for the users to easily provide additional input on the mosaics. this input is then propagated to the whole video interval thanks to a second segmentation pass.

In a first step (E1) of the segmentation method, the users choose reference instants to divide the shot into several intervals. The images at these reference instants are called reference images. In the following description, a shot starts at instant $t_A$ and ends at instant $t_B$.

The selection can be a cut of the shot into constant time intervals. It can also be based on other criteria such as first or last instants at which a foreground object is fully visible, instant at which a part of a layer appears behind a closer layer after long occlusion. if the selection consists in cutting the shot in constant time intervals, the cut can be done automatically without the help of the user.

In a second step (E2), the user performs a segmentation of these reference images.

On reference images, the segmentations are obtained semi-interactively by the users.

According to the assumption usually made in motion segmentation, the scene can be approximated by a set of rigid layers whose motion in the image plane is well described by a parametric model. Additionally, in the present invention, it is assumed that the number of layers is known and that the layers keep the same depth order during the whole shot. The output of step E2 results in a set of reference layers.

In a step E3, the mosaics are initialized.

The proposed motion segmentation system requires several sets of as many mosaics as there are layers in the scene. Mosaics can be reused in region filling or video editing systems, or also for compression tasks.

The mosaic of a given layer results from the accumulation of the layer data from the previously segmented images.

In other approaches, the mosaic of a given layer results from the segmentation of one previous image.

One approach for the creation of mosaics concerns the simplest case: the one of a foreground object fully visible in the image associated with the chosen reference instant. The interest of such a situation can serve as a guide in the manual choice of reference instants. For such a foreground object the mosaic is made up of the region corresponding to the complete object. The whole remaining area of the mosaic is empty. Since the considered object is fully visible at the reference instant, the mosaic does not need to be further completed. Thus, in this case, the users can easily provide the mosaic before the motion based segmentation step. The object boundaries can be obtained by an interactive tool for still image segmentation.

Another approach is inspired by the semi automatic stitching tools commonly used to generate panoramas from several photographs. Such tools usually detect feature points in each photograph of the set. Then for each pair of images with a common overlapping area, the features belonging to this area are matched to compute the global transformation between the two photographs. In our case, the set of photographs is replaced by two distant images from the original sequence. The users are guided by their knowledge of the sequence to choose adequately the two images such that they will provide together the whole layer support.

While one assumes that there is only one layer in the common cases of panorama, in the present embodiment there are several layers. The users segment both distant reference images and indicate layers correspondences. Matching between features must take into account both segmentation maps.

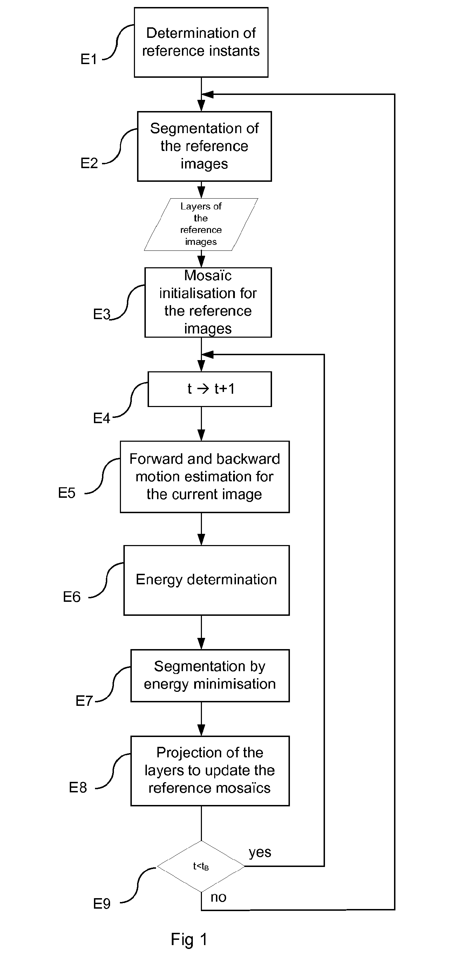

In the following steps, the next images have to be segmented, sequentially between the two reference instants $t_A$ and $t_B$. A simplified flow chart of the sequential system after initialization is shown in Figure 1.

The aim is to progress from $t_A$ to $t_B$ while obtaining a succession of temporally consistent segmentations. The independant segmentation maps obtained by the users at $t_A$ and $t_B$ may be seen as boundary conditions that are propagated in the interval. At current time t (step E4), the segmentation of the image $I_t$ is first predicted by projection of the previous segmentation.

A dense backward motion field between $I_t$ and $I_{tA}$ and a dense forward motion field between $I_t$ and $I_{tB}$ are estimated at step E5. A reliability index, based on the Displaced Frame Difference (DFD) is computed for every motion vector of both fields based on the following equation (1):

The prediction of the segmentation map at next time t+1 is done by projection of the segmentation map of $I_t$ using affine motion models estimated from a dense motion field computed between $I_t$ and $I_{t+1}$. This is continued for all the images of the interval $[t_A, t_B]$.

$$\forall X \in \{A, B\} \quad reliab_X(p) = \max\left(0, 1 - \frac{\|I_t(p) - I_{t_X}(p - dp_X)\|}{\tau_1}\right).$$

where $dp_A$ is the backward motion vector estimated at pixel p, $dp_B$ the forward one, and $\tau_1$ is an empirical normalization threshold. As for parametric motion modeling, the affine model with 6 degrees of freedom is adopted according to the following equation (2):

$$MM(x, y) = \begin{pmatrix} a_{x0} + a_{xx} \cdot x + a_{xy} \cdot y \\ a_{y0} + a_{yx} \cdot x + a_{yy} \cdot y \end{pmatrix}.$$

Based on the dense motion fields, forward and backward affine motion models are estimated for each layer of the predicted map. The motion parameters are recovered by a standard linear regression technique but the reliability measure is used to weight the influence of each vector on the estimate. For the motion models, we use the following notations: $MM_{A,l}$ is the backward affine motion model estimated between $I_t$ and $I_{tA}$ on layer l and $MM_{B,l}$ is the forward affine motion model estimated between It and $I_{tB}$ on layer l. According to the assumption of intensity conservation, for a pixel p of image $I_t$ that belongs to the layer l and on condition it is not occluded in $I_{tA}$ and $I_{tB}$. The following equation (3) is applied.

$$\forall X \in \{A, B\} \quad I_t(p) = I_{t_X}(p - MM_{X,l}(p)).$$

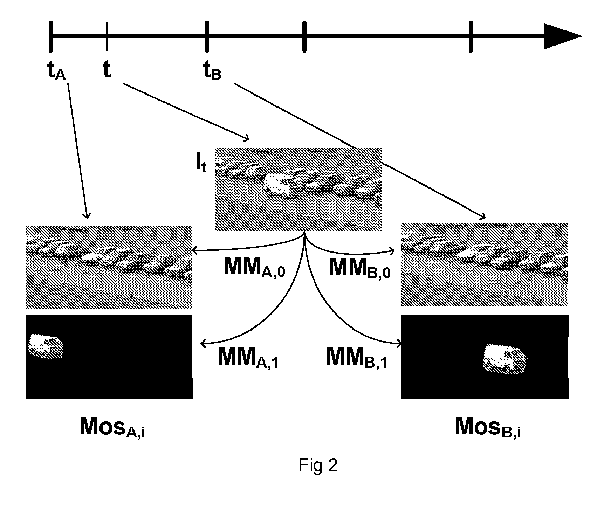

Figure 2 illustrates the matching between the current layer to be segmented and the mosaics.

In a step E6, the following objective function is determined, which is the sum of two standard terms, color data term and spatial smoothness, plus two terms: a mosaic-based term and a temporal term. This is represented by the following equation (4):

$$E(f) = \underbrace{\sum_{p \in P} C_p(f_p)}_{E_{color}(f)} + \lambda_1 \underbrace{\sum_{(p,q) \in C} V_{p,q}(f_p, f_q)}_{E_{smooth}(f)} + \lambda_2 \underbrace{\sum_{p \in P} M_p(f_p)}_{E_{mosaic}(f)} + \lambda_3 \underbrace{\sum_{p \in P} \psi(p)}_{E_{temp}(f)}$$

where $P$ s the pixel set to be segmented, $C$ is the set of neighbor pairs with respect to 8-connectivity, and $\lambda_1$, $\lambda_2$ and $\lambda_3$ are positive parameters which weight the influence of each term.

- Color term

Cp(fp) is a standard color data penalty term at pixel p, set as negative log-likelihood of color distribution of the layer $f_p$. This distribution consists of the Gaussian Mixture Model computed on the mosaics $Mos_{A,fp}$ and $Mos_{B,fp}$ in their initial state.

- standard contrast sensitive regularization term or spatial smoothness:

Vp,q(fp,fq) is a standard contrast-sensitive regularization term defined by the following equation (5):

$$V_{p,q}(f_p, f_q) = \frac{1}{dist(p,q)} \exp(-\frac{\|I_t(p) - I_t(q)\|^2}{2\sigma^2}) \cdot T(f_p \neq f_q)$$

where $\sigma^2$ is the standard deviation of the norm of the gradient over the neighborhood and T(.) is 1 if the argument predicate is true and 0 otherwise.

- image- to- mosaic motion data term:

The following equations (6) and (7) respectively illustrate this term:

$$M_p(f_p) = \min_{X \in \{A,B\}} \left( resMos(X, f_p) \right)$$

$$resMos(X, f_p) = \begin{cases} \arctan(\|I_t(p) - Mos_{X,f_p}(p'_X)\|^2 - \tau_2) + \frac{\pi}{2} & \text{if } p'_X \text{ belongs to the mosaic support} \\ +\alpha & \text{otherwise} \end{cases}$$

Mp(fp) is a image-to-mosaic penalty term at pixel p for the motion models corresponding to layer $f_p$. It corresponds to a residual computed between the original image and each one of the mosaics. $p'_A$ and $p'_B$ are the positions associated in $Mos_{A,fp}$ and in $Mos_{B,fp}$ to p in It according to $MM_{A,fp}$ and $MM_{B,fp}$. This smooth penalty and its threshold parameter $T_2$ allow a soft distinction between low residuals (well classified pixels) and high residuals (wrongly classified pixels or occluded pixels).

- temporal term:

The following equation (8) illustrates the energy associated with the temporal term:

$$\psi(p) = \begin{cases} 1 & \text{if } f_p \neq f'_p \text{ and } f'_p \neq \emptyset \\ 0 & \text{otherwise} \end{cases}$$

where $f'_p$ is the predicted label of pixel p at instant t, and $\varphi$ represents the areas without any predicted label, i.e. areas which are occluded in $I_{t-1}$ and visible in $I_t$. This temporal term enforces temporally consistency of labeling between consecutive images.

In a step E7, the global energy (4) is minimized using graph-cuts. In other embodiments, the ICM (integrated conditional mode) method can be used, other techniques can also be used.

Predicted motion boundaries are finally refined using the graph cut framework As an arbitrary number of layers can be handled, the $\alpha$-expansion algorithm is used to solve the multi-labels problem. All the layer supports for the considered instant are obtained simultaneously, which means layer subtraction is not used. Moreover the algorithm provides dense segmentation maps without any additional label for noise, occluded pixels or indetermination.

Given that we work at the pixel scale, building a graph on the whole image then solving it, is computationally expensive.

Moreover, as the method assumes to get a temporal consistency among the segmentation maps, it is not useful to question all of the pixels at every instant. The graph is built on an uncertainty strip around the predicted motion boundaries and on appearing areas only. Notice that appearing areas have no predicted label, so they are also considered as uncertain. Pixels ignored by the graph keep their predicted label that is considered correct. Such a graph restriction constraints the segmentations both spatially and temporally. Pixels that belong to the outlines of the graph area keep their predicted label and constitute boundary conditions for the segmentation to be obtained.

These labeled pixels are considered as seeds and provide hard constraints which are satisfied setting to specific values the weights of the links which connect them to the terminals.

In a step E8, the reference mosaics are updated.

In the preferred embodiment, no user interaction is required to build the mosaics.

At this step the layers obtained for $I_t$ are warped into the reference mosaics using either the forward models or the backward models depending on the mosaic of destination. The stitching of the supports of $I_t$ into the reference mosaics is described later.

The mosaicing is embedded in the time-sequential segmentation system. For each layer, the supports are stitched automatically together as and when they are extracted.

Motion layer extraction consists in extracting the layer supports but also in estimating the motion model parameters of each layer. Thus, once the supports are extracted from the current processed image, the motion models allow to warp these layers into the reference mosaics to build. That means that these latter evolve as the segmentation process progresses. Regions that appear for the first time are copied into the mosaics. For the regions already seen, the values of the first apparition are kept without any refreshment (for instance temporal median filtering).

Given the notations given above:

- either the pixel p of layer I in $I_t$ has already been disoccluded in the images previously segmented, in which case the information is already available in the reference mosaics generated for layer I: $Mos_{A,I}$ and $Mos_{B,I}$.
- or the pixel p of layer I in It occurs for the first time, in which case the information is missing in the reference mosaics, so it is copied. The following equation (9) illustrates this:

$$\forall X \in \{A, B\} \quad Mos_{X,I}(p - MM_{X,I}(p)) = I_t(p)$$

In case of segmentation mistakes, the mosaic is directly affected. In other words, misclassified areas may be stitched into the wrong mosaic. Voluntarily, such errors during mosaic generation are not concealed. It allows the users to efficiently remove them at the end of the first segmentation pass. A second segmentation pass with such corrected mosaics as input can improve notably the accuracy of the motion boundaries. A user interaction can be performed when all images in said interval have been segmented. The method comprises a further step of user interaction to refine at least one of the obtained mosaics.

Further to the user interaction, the following steps are repeated sequentially for each image in each defined interval with the updated mosaics,

- forward and backward motion estimation compared to the reference images for each layer of the current image to establish motion models,
- energy determination as a function of color attributes, temporal constraints, spatial smoothness, an image-to-motion data term
- segmentation of the current image by minimizing the said energy.

Preferentially, a user interaction modifies at least one mosaic manually during said sequential steps.

Then one transformation per layer is estimated. Instead of automatic features matching, the users can manually select the pairs of control points.

This approach is particularly well adapted for the background if the areas occluded by foreground objects in the first image are totally disoccluded in the last image.

After step E8, a test is performed to determine if the end of the interval is reached, that is to say, if all the images in the interval $[t_A, t_B[$ have been segmented. If it is the case, the method goes to step E2, otherwise step E4 is performed and next image will be segmented.

The steps E5 to E9 are repeated for all the images in the interval $]t_A,t_B[$. When t reaches $t_B$, a new reference interval is determined and the steps E2 to E4 are repeated for the new reference image determining the end of the new interval.

In other embodiments, the steps E2 to E4 can be performed for all the reference images before doing it for the other images. This means that steps E2 to E4 are repeated for all the current images. We thus obtain a set of reference mosaics for all these images; After that, the steps E5 to E9 are repeated for all the images of each interval, using the reference mosaics of the concerned interval.

In other embodiments of the invention, only one of the reference image can be used for the mosaic instead of the two, either the start image of the interval or the end image. Therefore, only backward or forward motion is done in this embodiment.

**Claims**

1. Method for segmenting video segments comprising the steps of

   - determining reference instants, which cut the shots into a plurality of intervals, said images defined at reference instants being called reference images,
   - segmenting at least one reference image to obtain a set of layers for at least said reference images,
   - determining one mosaic associated with each of the layer of the reference images,
   sequentially, for each image in each defined interval,
   - forward and backward motion estimation compared to the reference images for each layer of the current image to establish motion models,
   - energy determination as a function of color attributes, temporal constraints, spatial smoothness,
   - segmentation of the current image by minimizing the said energy,

   **Characterized in that** the energy further comprises an image-to-mosaic motion data term.

2. Method according to claim 1 **characterized in that** the two reference images are segmented in order to obtain a set of layers for the two reference images.

3. Method according to claim 1 or 2 **characterized in that** said mosaic of a given layer results from the accumulation of the layer data from the previously segmented images.

4. Method according to claim 1 or 2 **characterized in that** said mosaic of a given layer results from the segmentation of one previous image.

5. Method according to claim 1 **characterized in that** it further comprises a step of projection of the segmented layers of the current image to the corresponding reference mosaics to update the reference mosaics.

6. Method according to one of the preceding claims **characterized in that** the energy minimization uses the graph cuts framework.

7. Method according to one the preceding claims **characterized in that** when all images in said interval have been segmented, it comprises a further step of user interaction to refine at least one of the obtained mosaics.

8. Method according to claim 7 **characterized in that** further to the user interaction, the following steps are repeated sequentially for each image in each defined interval with the updated mosaics,

   - forward and backward motion estimation compared to the reference images for each layer of the current image to establish motion models,
   - energy determination as a function of color attributes, temporal constraints, spatial smoothness, an image-to-motion data term
   - segmentation of the current image by minimizing the said energy.

9. Method according to claim 1 **characterized in that** a user interaction modifies at least one mosaic manually during said sequential steps.

E1 — Determination of reference instants

E2 — Segmentation of the reference images

Layers of the reference images

E3 — Mosaïc initialisation for the reference images

E4 — t → t+1

E5 — Forward and backward motion estimation for the current image

E6 — Energy determination

E7 — Segmentation by energy minimisation

E8 — Projection of the layers to update the reference mosaïcs

E9 — $t < t_B$   yes   no

Fig 1

Fig 2

**European Patent Office**

## EUROPEAN SEARCH REPORT

Application Number

EP 08 30 0148

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANGJIAN XIAO ET AL: "Layer-based video registration" MACHINE VISION AND APPLICATIONS, SPRINGER-VERLAG, BE, vol. 16, no. 2, 1 February 2005 (2005-02-01), pages 75-84, XP019323888 ISSN: 1432-1769 * sec. 2, "Layer mosaics * * abstract * | 1-9 | INV. G06T7/20 |
| A | BUGEAU A ET AL: "TRACK AND CUT: SIMULTANEOUS TRACKING AND SEGMENTATION OF MULTIPLE OBJECTS WITH GRAPH CUTS" VISAPP - INTERNATIONAL CONFERENCE ON COMPUTER VISION THEORY ANDAPPLICATIONS,, [Online] no. 3rd conf, 22 January 2008 (2008-01-22), pages 447-454, XP009103212 Retrieved from the Internet: URL:http://www.irisa.fr/vista/Papers/2008_visapp_bugeau.pdf> * the whole document * | 1-9 | |
| A | KEDAR A PATWARDHAN ET AL: "Video Inpainting Under Constrained Camera Motion" IEEE TRANSACTIONS ON IMAGE PROCESSING, IEEE SERVICE CENTER, PISCATAWAY, NJ, US, vol. 16, no. 2, 1 February 2007 (2007-02-01), pages 545-553, XP011155667 ISSN: 1057-7149 * abstract; figures 1,3 * | 1-9 | TECHNICAL FIELDS SEARCHED (IPC)<br><br>G06T |

The present search report has been drawn up for all claims

| Place of search | Date of completion of the search | Examiner |
|---|---|---|
| Munich | 16 July 2008 | Werling, Alexander |

EPO FORM 1503 03.82 (P04C01)